# EUROPEAN PATENT APPLICATION

(11) **EP 4 177 232 A1**
(43) Date of publication of application: **10.05.2023**
(21) Application number: 21215094.0
(22) Date of filing: 16.12.2021
(51) Int. Cl.: C04B 33/13, C04B 35/19

(54) **PRODUCTION PROCESS OF SINTERING TEMPERATURE REDUCING ADDITIVE FOR CERAMIC BODIES, COMPOSITION AND RESULTING PRODUCT**

(30) Priority: 05.11.2021 BR 102021022287
(71) Applicant: Miranda Salgueiro, Alexandre, 13960000 Socorro - São Paulo (BR)
(72) Inventor: Miranda Salgueiro, Alexandre, 13960000 Socorro - São Paulo (BR)
(74) Representative: Pereira da Cruz, Joao

(57) **Abstract**

The present invention relates to a process (10) for the production of additive (11) that reduces the sintering temperature of ceramic bodies and obtaining traditional ceramic floors and wall tiles, porcelain tiles, earthenware bodies, table porcelain, stoneware among others; said additive (11) production process provides for a dosage stage (T1) with potassium feldspar, ground to reach a granulometry of 100 to 200 mesh size and dosed together with an additional component, sodium tetraborate anhydrous, ground in a mill to reach a granulometry of 14 to 80 mesh size, and both sodium tetraborate anhydrous and potassium feldspar can be presented ground or in the form of larger granules; and the said process (10) provides for a cooling stage (T4) consisting of the application of the heated additive (11) body in a tank or adequate reservoir containing water, in order to cool the body and form glass granules; the said additive consists of potassium feldspar and sodium tetraborate anhydrous, presenting quantitative values in percentages, being 26. 0% of sodium tetraborate anhydrous and 74.0% of potassium feldspar, obtaining a product resulting in additive (11) that reduces the sintering temperature of ceramic bodies.

## Description

### FIELD OF THE INVENTION

The present invention addresses the production process of sintering temperature reducing additive for ceramic bodies, composition and resulting product, with said ceramic bodies of the type for the manufacture of floor and wall tiles such as thin tiles, porous tiles, semi-porous tiles, semi-stoneware, stoneware and porcelain tiles, table porcelain, earthenware, tableware and similar products; this additive production process comprises a set of reduced steps such as: i) dosing stage of the components, namely sodium tetraborate anhydrous and potassium feldspar; ii) mixing stage, where homogenization of the components occurs; iii) melting stage of the mass obtained in a ceramic frit kiln; and iv) cooling stage, which combined with the components inserted result in a granulate additive that can be applied directly in the composition of ceramic bodies or can be subjected to additional stages of v) drying and vi) grinding in order to obtain a more refined product,

The application of the additive in glass granules or ground increases the final quality of the ceramic bodies, reducing their sintering time, which makes the production process more economical, since with the same amount of fuel it is possible to fire a larger number of ceramic bodies, increasing the productivity of the kiln, and consequently reducing the amount of fossil fuel used, as well as obtaining a large reduction in the emission of the greenhouse gas CO₂ into the atmosphere.

### BACKGROUND OF THE INVENTION

It is known that a firing process known as sintering is used to obtain floors and coatings. The procedure involves firing the raw material in high temperature kilns, heated according to the 'melting temperature' of the material to be sintered, thus conserving the raw material in a solid state.

The material used for the manufacture of ceramics, associated with the high temperatures of the kiln for sintering, directly interferes in the characteristics and final quality of the pieces after firing; for example, to produce a floor composed of vitrified clay materials, it is necessary for the body to be sintered at 1190 ºC and the residence cycle in the kiln to be 37 minutes, while the range adopted with water absorption ≤ 0.5% is 1210 ºC and the residence cycle in the kiln is 1:30 to 2:00 hours on average, thus the variation of temperature and residence cycle in the kiln is noticeable for determining the types of floors and coatings.

As mentioned above, each mineralogical composition of porcelain and ceramic floor tiles have a type of firing with pre-established temperatures, a fact that prevents only one kiln from being used to fire different types of ceramic bodies.

Another drawback is the fact that ceramic bodies that require a high kiln temperature generate a high rate of expenditure of fuel used for firing, such that the higher temperature required for fusing the piece, the more fuel is used.

Similarly, the floors and porcelain tiles solidified after sintering conform pieces with their own characteristics, such as, for example, ceramic tiles, which, because they are made from the cooking of a clay mixture, which are given a vitrified surface, result in pieces with greater resistance to wear and that absorb less environmental humidity than other types of floors and tiles.

However, the lack of pieces with the same characteristics as the aforementioned ceramic tiles has led to the development of additives to the floor and coating bodies in order to improve the characteristics, such as water absorption, abrasion resistance, mechanical resistance and means to improve the cracking and porosity of the piece, which generally occur due to the presence of flocculation in the clay and kaolin materials during the manufacturing of the flooring, causing segregation and flaws in the ceramic matrix.

The applicant, seeking to contribute with improvements in the production process of ceramic floors, filed application no. PI 0304477-7 that presents a fluxing additive and its respective obtainment process, with said additive applicable in the body used in the production of single-fired ceramic tiles, for the manufacture of low water absorption tiles, said additive provides components such as potassium feldspar, sodium feldspar, ulexite and petalite, being prepared from stages like: (i) grinding, (ii) granulometric classification, (iii) separation and purification of contaminating ferrous and clay minerals, (iv) weighing, (v) mixing and homogenization of minerals and ores, (vi) melting; and (vii) grinding. Subsequently, the resulting additive is applied to the mineralogical composition of the ceramic bodies.

Therefore, the applicant hereby presents innovations to the market seeking to reduce the stages of the production process of the aforementioned additive, as well as seeking to contribute to the final quality of the manufactured additive, providing environmental advantages, such as reducing the fuel used to fire the ceramic bodies.

### PRIOR ART

One type of additive foreseen in the market is presented in document no. BR10.212.014098-5, which foresees the use of barium oxide acting as a synthetic flux in the behavior of porcelain bodies in the form of pressed slabs from the use of previously ceramic raw materials containing said oxide in their composition. The barium oxide acts as a synthetic fluxing agent and as a structure organizer, and when incorporated into the glass phase, it has a nucleating effect on the silicon-aluminum-potassium phase by reacting with the free silica that, together with the high concentrated potassium content, forms a new crystalline phase called microclinium, and is also applied as an intensifier agent in the formation of a reactive liquid base, acting together with the feldspar in porcelain tile compositions.

Another document no. CN1394828A presents a composition for low-temperature preparation of a ceramic material; where said composition uses feldspar and kaolin as basic raw materials and adding high-gloss additives of borax, alumina, zirconium oxide and zinc oxide etc.
The cost of ceramics prepared using the said invented material can be reduced by more than 90%, and its technological condition is moderate, and the full wavelength radiance value of the said ceramic powder is 0.93, and the radiance value at the wavelength of 8-14 micrometer is greater than 0.95.

The documents listed above, despite contributing to the resistance of the pieces and general improvement of their characteristics, still do not present additives capable of reducing the sintering time of ceramic bodies, as well as, do not present similar composition to the present application, thus, it is a fact that the documents mentioned in the paragraphs above, despite belonging to the same field of application, do not present any of the characteristics of the composition now improved, thus ensuring that it complies with the legal requirements of patentability.

### OBJECTIVES OF THE INVENTION

One of the objectives of the present invention is to present a process for producing a temperature-reducing additive with an innovative composition that, when applied to the mineralogical compositions of ceramic bodies for porcelain floors, among others, reduces the sintering temperature in kilns and, consequently, provides fuel savings for firing the bodies, consequently significantly reducing the emission of CO₂, a greenhouse gas into the atmosphere.

Another objective of the present invention is to present a process for producing an additive that associated with the applied composition reduces the sintering temperature and contributes to the formation of floors and wall tiles with lower water absorption rate, i.e., with water absorption ≤ 0.5%.

Another objective of the present invention is to present a process for the production of an additive whose resulting product can be applied in various types of ceramic floor and wall tiles and that allows the reduction of kiln temperatures, as well as the use of only one kiln for firing various types of bodies.

Another objective of the present invention consists of the characteristics of the final additive which is lead free and composes an anti-flocculant ceramic flux that does not flocculate the clay of the earthenware ceramic body, table porcelain, ceramic floors and wall tiles manufactured by the "wet" system comprised of the application of dosed ingredients, by adding water during the mixture, thus achieving a better quality and homogenization of the body, and 'dry' manufacturing, where the ingredients are mixed without adding water, and milled until they reach the appropriate granulometry to pass through the respective mesh, as well as being presented in larger granules.

Another objective of the present invention is to present a process for producing an additive that associated with the applied composition is able to reduce sintering and increase the mechanical resistance of the pieces after firing, providing greater hygiene due to its low water absorption.

Another objective of the present invention is to present an additive production process, whose final product when applied to the bodies to be fired results in pieces with greater color options due to the ceramic pigments being much more stable and with stronger shades at low temperatures and, finally, a much longer life for the refractories in the kiln.

Another objective of the present invention is to present a process for producing a sintering reduction additive that aims to reduce the total firing cycle of porcelain table and floor tile products by considerably increasing the production per hour with the same temperature and quantity of fuel or electrical energy used previously.

Another objective of the present invention is to provide ceramic factories that are not equipped with high temperature kilns, high pressure presses, ball mills and atomizers, to produce the porcelain tiles or floors with low water absorption ≤ 0.5% only by adding the additive in the mineralogical composition of the body.

Another objective of the present invention is to present an additive production process that produces a resultant additive that, when applied to the ceramic mineralogical bodies, is able to contribute to the quick firing of the same, using the same kiln for firing, which consequently increases the number of fired ceramic pieces. This advantage provides fuel savings applied in the firing kilns, contributing to environmental preservation, since it reduces the level of CO₂ released into the atmosphere and reduces the collection of fuel used to supply the kilns.

### DESCRIPTION OF FIGURES

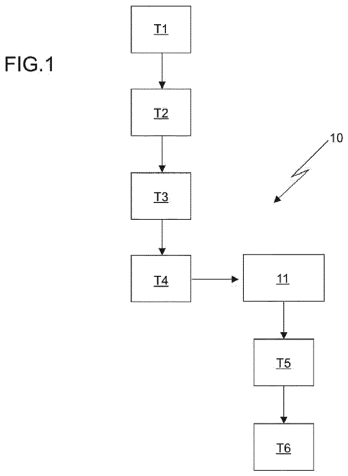

To complement the present description in order to obtain a better understanding of the characteristics of the present invention and according to a preferred practical execution of the same, a set of drawings is attached to the description, where, in an exemplified but not limiting way, is represented in figure 1, which represents a schematic block diagram illustrating the stages of the production process of the sintering temperature reducing additive for ceramic bodies.

### DETAILED DESCRIPTION

With reference to the illustrated drawing, the present patent of invention refers to the production process of sintering temperature reducing additive for ceramic bodies, composition and resulting product, more precisely, it is a process (10) for the production of additive (11) that reduces the sintering temperature of ceramic bodies and obtains traditional ceramic floor and wall tiles, porcelain tiles, earthenware, porcelain tableware, stoneware, among others. This additive production process (10) consists of the following stages:
1. Dosing stage (T1) - In this stage the components are weighed, one of them being the ground potassium feldspar and deposited in a mixing device;
2. Component mixing stage (T2) - After mixing, the components are homogenized in a horizontal intermittent vane mixer;
3. Melting stage of the body obtained (T3) - The body resulting from the mixer is deposited in a high temperature continuous ceramic frit melting furnace for its complete melting, elimination of salts and carbonates and "vitrification" of the compound; and
4. Cooling Stage (T4) - The heated body is subjected to appropriate cooling;
5. Drying stage (T5) - The additive is subjected to a drying device; and
6. Grinding Stage (T6) - The dry product is ground in a ball mill or other appropriate machinery.

According to the present invention, said additive (11) production process (10) provides for a dosage stage (T1) with potassium feldspar, preferably ground to a particle size of 100 to 200 mesh and dosed together with an additional component, and sodium tetraborate anhydrous, preferably ground in a ball mill or similar equipment to a particle size of 14 to 80 mesh; as well as said process (10) provides a cooling stage (T4) consisting of the application of the heated additive body (11) in a tank or suitable reservoir containing water at room temperature, in order to cool the of the body and form glass granules.

The combination of the process (10) with the components potassium feldspar and sodium tetraborate anhydrous for forming the additive (11) can optionally dispense with the drying stage (T5) where the granules are open-air dried or exposed to a rotary gas or wood drier and the grinding stage (T6) where the glass granules are ground in a continuous ball mill and classified in 100 or 200 mesh.

The composition of the additive (11) consists of potassium feldspar and sodium tetraborate anhydrous.

The quantitative values of the additive (11) composition are presented in percentages, and consist of: (i) 26.0% Sodium Tetraborate anhydrous; and (ii) 74.0% Potassium feldspar.

Said additive (11) composition may provide for percentage variation of the applied quantitative values, showing variation of 10% more or less in relation to the applied 26.0% of sodium tetraborate anhydrous and the 74.0% of potassium feldspar, exposing the following variation: (i) sodium anhydrous tetraborate with minimum variation of 16.0% to maximum variation of 36.0%; and (ii) potassium feldspar with minimum variation of 64.0% and maximum variation of 84.0%.

In a second embodiment of the composition, sintering temperature reducing additive (11) provides for application of: (1) 34.0% sodium tetraborate pentahydrate; and (ii) 66.0% potassium feldspar.

The quantitative values of the composition variation of the additive (11), can provide for percentage variation of the applied quantitative values, showing variation of 10% more or less compared to the applied 34.0% of sodium tetraborate pentahydrate and the 66.0% of potassium feldspar, exposing the following variation: (i) sodium tetraborate pentahydrate with minimum variation of 24.0% to maximum variation of 44.0%; and (ii) potassium feldspar with minimum variation of 56.0% and maximum variation of 76.0%.

The resulting product consists of an additive (11) presented in vitrified or granulated form and that can be applied to the mineralogical composition of ceramic bodies for earthenware, table porcelain, sanitary ware, atomized bodies in wet or dry systems for ceramic floors and wall tiles, stoneware, among others, to reduce the sintering temperature of the bodies.

Said additive (11) as the resulting product, reduces the sintering temperature of non-flocculent ceramic bodies for earthenware, tableware porcelain, ceramic floors and wall tiles for the wet and dry system, and is ground to the appropriate mesh size or can be presented in granular form.

The application of the additive (11) as a resultant product in the mineralogical composition of earthenware bodies composes single-fired resistant ceramics with water absorption of about 8.0% at a temperature of 1090ºC to 980ºC.

For porcelain table and sanitary ware bodies, the inclusion of the additive (11) composition as the resulting product, provides the reduction the sintering temperature of the kiln to 1090 ºC at 980 ºC.

The application of the additive (11) as a resultant product in the mineralogical composition of porcelain floor and wall tile bodies provides the reduction of the sintering temperature of the kiln from 1220 ºC / 1240 ºC to 1150 ºC, and can reach up to 1090 ºC, reducing the water absorption of a traditional flooring body with low, medium or high water absorption to 0.5% absorption.

While in wet ceramic bodies, i.e., those with high water absorption that receive the resulting product as an additive (11), they absorb less water, equivalent to up to 0.5% absorption at the same temperature and total firing cycle of the kiln used in the conventional body.

For dry ceramic bodies of the red clay or similar type mixed with resulting product in additive (11) product in a rotary intermittent vane mixer before wetting, results in a reduction in the sintering temperature of this body, able to lower its water absorption by up to 0.5%.

The application of the resulting product in additive (11) in the composition of glazes or slips reduces the sintering temperature, and in the case of slips specifically, stops the staining that occurs on the ceramic body due to water absorption.

It is true that when the present invention is put into practice, modifications may be introduced with regards to certain details, without this implying in deviating from the fundamental principles that are clearly supported in the claims, it being understood that the terminology used was not intended as a limitation.

## Claims

1. A production process (10) of sintering temperature reducing additive for ceramic bodies said process (10) for the production of additive (11) reducing the sintering temperature of ceramic bodies and the obtaining of traditional ceramic floor and wall tiles, porcelain tiles, earthenware, porcelain tableware, stoneware bodies, among others and said process (10) comprising the following steps of (i) a dosing stage (T1), in which the components are weighed, one of them being potassium feldspar, ground and deposited in a mixing device; (ii) a component mixing stage (T2), after mixing, the components are homogenized in a horizontal intermittent vane mixer; (iii) melting stage of the body obtained (T3), the body resulting from the mixer is deposited in a high temperature continuous ceramic frit melting kiln for its complete melting, elimination of salts and carbonates and "vitrification" of the compound; (iv) cooling stage (T4), where the heated body undergoes an adequate cooling; (v) drying stage (T5), the additive is subjected to a drying device; and (vi) grinding stage (T6), the dry product is ground in a ball mill or other suitable machinery;
**wherein**
the process (10) provides for the dosage stage (T1) with the addition of potassium feldspar ground to reach a particle size of 100 to 200 mesh and dosed together with an additional component, the anhydrous sodium tetraborate, ground in a ball mill or other similar equipment to reach a particle size of 14 to 80 mesh; as well as said process (10) provides for a cooling step (T4) comprised of the application of the heated additive body (11) in a tank or suitable reservoir containing water at room temperature in order to cool the body and form glass granules.

2. A process (10) according to the previous claim wherein an optional presentation of the additive production process **wherein** the combination of the process (10) with the components potassium feldspar and sodium tetraborate anhydrous for forming the additive (11) dispense with the drying stages (T5) where the granules are open-air dried or exposed to a rotary gas or wood drier and grinding step (T6) where the glass granules are ground in a continuous ball mill and classified in 100 or 200 mesh.

3. A composition comprising potassium feldspar and sodium anhydrous tetraborate, presented in quantitative percentage values, being 26.0% of sodium anhydrous tetraborate and 74.0% of potassium feldspar.

4. A composition according to the previous claim and in an application percentage variation of the components of the composition **wherein** an additive (11) composition providing for application variation of 10% more or less than the applied 26.0% of sodium tetraborate anhydrous and the 74.0% of potassium feldspar, presenting sodium tetraborate anhydrous with minimum variation of 16.0% and maximum variation of 36.0% and potassium feldspar with minimum variation of 64.0% and maximum variation of 84.0%.

5. A composition according to any of claims 3 to 4 and a second variation of the composition **wherein** the additive (11) reducing sintering temperature provide for application of 34.0% sodium tetraborate pentahydrate and 66.0% potassium feldspar.

6. A composition according to any of claims 3 to 4 and in a percentage variation of the components provided in the composition variation **wherein** the quantitative values of the composition, provide for variation of 10% more or less than the applied 34.0% of sodium tetraborate pentahydrate and 66.0% of potassium feldspar, exposing sodium tetraborate pentahydrate with minimum variation of 24% and maximum variation of 44.0% and potassium feldspar with minimum variation of 56.0% and maximum variation of 76.0%.

7. An additive (11) **characterized by** being presented in vitrified or granular form for application to the mineralogical composition of ceramic bodies for earthenware, table porcelain, sanitary ware, atomized bodies in wet or dry system of ceramic floors and wall tiles, stoneware, among others.

8. Use of the additive (11) as application in ceramic bodies for earthenware, table porcelain, ceramic floors and tiles for wet and dry system.

9. Use of the additive (11) as application in the mineralogical composition of earthenware bodies composing single-fired resistant ceramics with water absorption of about 8.0% at a temperature of 1090ºC to 980ºC.

10. Use of the additive (11) as application in the mineralogical composition of porcelain floor and wall tile bodies generating the reduction of the sintering kiln temperature from 1220 ºC / 1240 ºC, being able to reach 1090 ºC.

11. Use of the additive (11) as application in the mineralogical composition of porcelain table and sanitary ware bodies and comprising the temperature reduction applied to the body, reduce the kiln sintering temperature to 1090 ºC to 980 ºC.

12. Use of the additive (11) as application in the mineralogical composition of ceramic wet bodies and comprising pieces with water absorption of up to 0.5% with the same temperature and total firing cycle of the kiln used in the conventional body.

13. Use of the additive (11) as application in the mineralogical composition of dry ceramic bodies, of the red clay type or similar reducing the sintering temperature of the body, as well as reducing the water absorption by up to 0.5%.

14. Use of the additive (11) as application with a temperature reducing additive composition that can be applied in the composition of ceramic glaze bodies or slips to reduce the sintering temperature of these compounds.
